# EUROPÄISCHE PATENTANMELDUNG

(11) **EP 2 345 626 A1**
(43) Veröffentlichungstag der Anmeldung: **20.07.2011**
(21) Anmeldenummer: 10150873.7
(22) Anmeldetag: 15.01.2010
(51) Int. Cl.: C04B 20/10, C04B 103/60

(54) **Beschichteter Zuschlag zur Betonherstellung**

(71) Anmelder: Sika Technology AG, 6340 Baar (CH)
(72) Erfinder: Honert, Dieter, 69234, Dielheim (DE); Knauber, Hans, 69214, Eppelheim (DE); Hillenbrand, Julia, 68789, St. Leon - Rot (DE)
(74) Vertreter: Sika Patent Attorneys

(57) **Zusammenfassung**

Gegenstand der Erfindung sind beschichtete Zuschläge zur Betonherstellung und Verfahren zu ihrer Herstellung. Die Erfindung betrifft auch Betonzusammensetzungen zur Betonherstellung und mit Zuschlägen versehenen Beton, Herstellungsverfahren und die Verwendung von organischen Polymeren zur Verbesserung der Stabilität von Beton, unter anderen auch gegen Alkali-Kieselsäure-Reaktion.

## Beschreibung

Die Erfindung betrifft beschichtete Zuschläge zur Betonherstellung und Verfahren zu ihrer Herstellung.

### Stand der Technik

Bei der Herstellung von Beton werden häufig Gemische aus Zementen und Zuschlägen eingesetzt. Die Zuschläge sind im Allgemeinen mineralische Zusätze in Partikelform, wie Sand, Kies, Grauwacke oder Opalsandstein. Solche Zuschläge werden auch als Gesteinskörnung bezeichnet.

Bei der Herstellung von Beton mit Zuschlägen ist es erforderlich, die Zuschläge auf den Zement abzustimmen, so dass der Beton eine ausreichende Stabilität aufweist. Ein besonderes Problem bei der Herstellung von Beton mit Zuschlägen ist das Auftreten der Alkali-Kieselsäure-Reaktion (AKR, auch als Alkalireaktion oder Betonkrebs bezeichnet). Damit bezeichnet man eine chemische Reaktion im ausgehärteten Beton zwischen Alkalien des Zements, Alkalilöslicher Kieselsäure und Wasser in Betonzuschlägen. Durch die Reaktion kann es insbesondere in feuchter Umgebung zu Rissen und sonstigen Beschädigungen von Betonbauteilen kommen. Als Alkali-empfindlich gelten insbesondere Zuschläge, die amorphe oder feinkristalline Silikate aufweisen, wie beispielsweise Opalsandstein oder Flint.

Um die AKR zu verhindern, kann dem Beton nach dem Stand der Technik Lithiumnitrat zugesetzt werden. Man geht davon aus, dass für die AKR die Diffusion von Natrium- oder Kaliumionen in die Zuschläge verantwortlich ist. Die zugesetzten Lithiumionen wandern wegen ihrer besseren Diffusionseigenschaften anstelle von Natrium- und Kaliumionen in die Zuschläge. Dort bilden sich wässrige Lithiumsilikate, die ein relativ kleines Kristallvolumen aufweisen und nicht zu einer Expansion des Betons führen. Dagegen beruht die AKR auf dem höheren Volumen von Kalium- und Natriumsilikaten, die zu einer Expansion des Betons und zur Ausbildung der Risse und weiteren Schäden führt.

Der Einsatz von Lithiumverbindungen ist jedoch nachteilig, da diese vergleichsweise teuer sind. Allgemein sind die globalen Lithiumvorkommen begrenzt. Dem steht ein hoher Bedarf gegenüber, unter anderem für den Einsatz in Batterien. Ein weiteres Problem beim Einsatz von Lithiumnitrat ist, dass bei einer konkreten Betonmischung nicht genau bekannt ist, welche Menge von Lithiumnitrat einzusetzen ist. Der Lithiumbedarf hängt von den konkreten Eigenschaften des Zements und des Zuschlags ab, wie Silikatgehalt, Porosität und pH-Wert, vor allem aber von dem prozentualen Gehalt an Alkaliionen, speziell Kalium- und Natriumionen. der als Na₂O-Äquivalent angegeben wird. Für die Anwender ist es jedoch im Allgemeinen zu aufwändig, vor der Herstellung des Betons Testreihen durchzuführen.

### Das der Erfindung zugrunde liegende Problem

Der Erfindung liegt das Problem zugrunde, Verfahren und Zusammensetzungen bereitzustellen, welche die oben beschriebenen Nachteile überwinden. Insbesondere soll ein Verfahren zur Betonherstellung bereitgestellt werden, bei dem die Alkali-Kieselsäure-Reaktion verhindert wird, ohne dass der Zusatz von Lithium-Verbindungen erforderlich ist. Der Beton soll eine gute Stabilität aufweisen und auch langfristig und in Gegenwart von Feuchtigkeit keine unerwünschten Veränderungen, wie Risse oder sonstige Materialschäden, zeigen, die durch alkalische Reaktionen im Betoninneren verursacht sind. Das Verfahren soll auf einfache Weise für verschiedene Zemente und Zuschläge einsetzbar sein.

### Ausführung der Erfindung

Das der Erfindung zugrunde liegende Problem wird überraschenderweise gelöst durch beschichtete Zuschläge, Betonzusammensetzungen und Beton, sowie Herstellungsverfahren und Verwendungen gemäß den Patentansprüchen. Gegenstand der Erfindung ist ein Verfahren zur Herstellung eines beschichteten Zuschlags zur Betonherstellung, wobei die Oberfläche eines mineralischen Zuschlags mit einem Polymerfilm beschichtet wird, wonach der Polymerfilm ausgehärtet wird.

Bevorzugt ist dabei ein Verfahren, wobei ein mineralischer Zuschlag mit einer Polymerdispersion in Kontakt gebracht und vermischt wird, so dass die Oberfläche des Zuschlags mit einem Polymerfilm beschichtet wird, wonach der Polymerfilm ausgehärtet wird.

Unter Zuschlägen für Beton versteht man Gemenge von Körnern aus natürlichen oder künstlichen Quellen. Im Allgemeinen werden mineralische Zusätze eingesetzt. Zuschläge für Beton müssen eine ausreichende Verwitterungsbeständigkeit aufweisen und dürfen nicht quellen, zerfallen oder in einer Betonzusammensetzung chemisch reagieren. Gesteinskörnungen für Beton und deren Eigenschaften werden nach der EN 12620 definiert und gemessen.

In bevorzugten Ausführungsformen der Erfindung ist der Zuschlag ausgewählt aus Sand, Kies und Splitt (bestehend aus Flint, Grauwacke, Sandstein und Kieselkreide).

Bei der Herstellung einer Betonzusammensetzung erfolgt die Auswahl des Betonzuschlags so, dass der Beton die erforderliche Festigkeit aufweist. Erfindungsgemäß können Normalzuschläge, Leichtzuschläge oder Schwerzuschläge eingesetzt werden. Als Normalzuschläge bezeichnet man solche mit einer Rohdichte von 2200 bis 3200 kg/m³, als Leichtzuschläge solche mit einer Rohdichte von weniger als 2200 kg/m³ und als Schwerzuschlag solche mit einer Rohdichte von mehr als 3200 kg/m³.

In bevorzugten Ausführungsformen der Erfindung liegt die mittlere Korngröße des Zuschlags zwischen 0,5 und 100 mm, insbesondere zwischen 2 und 50 mm, zwischen 5 und 50 mm oder zwischen 8 und 40 mm, bestimmt nach EN 12620.

Erfindungsgemäß wird auf dem Zuschlag ein Polymerfilm erzeugt, der ausgehärtet wird. Der Film kann nach bekannten Methoden erzeugt werden, beispielsweise durch Sprühen und Tauchen in Polymere oder Zusammensetzungen, welche die Polymere enthalten. Der so erzeugte Polymerfilm auf dem Zuschlag wird ausgehärtet, beispielsweise durch Trocknen. Die Beschichtung kann aus beliebigen Polymeren bestehen, beispielsweise thermoplastischen Polymeren oder chemisch aushärtenden Polymeren, wie Epoxidharzen und Polyurethanharzen.

Die erfindungsgemäße Beschichtung erfolgt besonders bevorzugt mit Hilfe einer Polymerdispersion (Polymerlatex). Damit bezeichnet man eine kolloidal stabile Dispersion von Polymerpartikeln in einer wässrigen Phase. Der Durchmesser der Polymerpartikel kann dabei beispielsweise zwischen 10 nm und 5 µm liegen. Die kolloidale Stabilität einer Polymerdispersion wird oft durch grenzflächenaktive Stoffe, wie Tenside oder Schutzkolloide, bewirkt. Polymerdispersionen sind kommerziell erhältlich und werden beispielsweise als Klebstoffe und Bindemittel eingesetzt.

Geeignete Polymerdispersionen zur Beschichtung sind solche, die üblicherweise zur Modifizierung mineralischer Baustoffe eingesetzt werden. Die erfindungsgemäß eingesetzte Polymerdispersion ist ein Filmbildner. Erfindungsgemäß wird bevorzugt eine wässrige Dispersion eingesetzt. Polymerdispersionen, die auf festen Oberflächen dünne Filme ausbilden, sind nach dem Stand der Technik bekannt. Die Polymerdispersion sollte nach der Filmbildung auf den Zuschlägen nicht mehr redispergierbar sein. Sie wird so ausgewählt, dass auf den Körnern des Zuschlags ein gleichmäßiger dünner Film ausgebildet wird, der möglichst wenig oder keine Lücken aufweist. Erfindungsgemäß wurde gefunden, dass Alkali-empfindliche Zuschläge, beispielsweise mit mittleren Korngrößen zwischen 8 und 22 mm, mit einer sehr dünnen Polymerschicht versehen werden können. Diese verhindert das Eindringen von Natrium- und Kaliumionen in den Zuschlag. Die erfindungsgemäße Schicht ist auch bei hohen pH-Werten stabil, die im Beton erreicht werden. Bei Einsatz des erfindungsgemäßen beschichteten Zuschlags ist es daher nicht erforderlich, einer Betonzusammensetzung Lithiumverbindungen, insbesondere Lithiumnitrat, zuzusetzen. Erfindungsgemäß kann die Alkali-Kieselsäure-Reaktion durch die Polymerbeschichtung vollständig verhindert werden.

Erfindungsgemäß wird beispielsweise eine Polymerdispersion eingesetzt, die einen Polymeranteil von 5-60 Gew.-%, insbesondere 8 bis 40 Gew.-% oder 10-25 Gew.-% aufweist. Dabei sollte die Polymerdispersion ausreichend dünnflüssig sein, um eine gleichmäßige und einfache Oberflächenbeschichtung zu erreichen. Andererseits sollte die Polymerdispersion nicht zu dünnflüssig sein, damit der Trocknungsvorgang nicht zu viel Energie benötigt und zu lange dauert, und damit der Polymerfilm möglichst gleichmäßig und lückenlos gebildet wird. Eine geeignete Konsistenz ist im Allgemeinen mit bekannten Polymerdispersionen ohne weiteres einstellbar.

Geeignet sind insbesondere Copolymere von Styrol, Butadien, Acrylat, Methacrylat, Vinylacetat, Vinylversatat, Methacrylamid und/oder Acrylamid sowie Epoxide und Polyurethane. Die Polymere können gegebenenfalls chemisch modifiziert sein, beispielsweise durch Carboxylierung. In bevorzugten Ausführungsformen der Erfindung ist das Polymer ein Styrol-Butadien-Copolymer oder ein Styrol-Acrylat-Copolymer, welche auch carboxyliert sein können.

Solche Polymere können durch Emulsionspolymerisation von ethylenisch ungesättigten Monomeren, wie Styrol und Butadien, oder (Meth)acrylaten erhalten werden.

Styrol-Butadien-Copolymere haben beispielsweise eine Monomerzusammensetzung von 50 bis 90 Gew.% Styrol und 10 bis 50 Gew.% Butadien und können gegebenenfalls noch geringe Mengen, z. B. 1 bis 5 Gew.%, bezogen auf alle Monomeren, Acrylsäure, Methacrylsäure, Acrylamid oder Methacrylamid enthalten. Geeignete Polymere und Dispersionen sind beispielsweise in der EP-A 754657 beschrieben.

Geeignet sind beispielsweise Polymerdispersionen, die ein Copolymerisat enthalten, das als Monomer Ester der Acrylsäure mit C2-C12-Alkanolen, wie Ethylarcylat, n-Butylacrylat oder 2-Ethylhexylacrylat, vinylaromatische Monomere, wie Styrol, oder Ester der Methacrylsäure, insbesondere mit C1 -C4 - Alkanolen, wie Methylacrylat, enthält. Die Copolymerisate können gegebenenfalls Monomere mit Harnstoff- oder Thioharnstoffgruppen, wie Ureidoethylenmethacrylat oder hydrolysierbaren Siliciumgruppen, wie 3-Methacryloxypropyltrimethyoxysilan enthalten. Geeignete Polymerdispersionen und deren Herstellungsverfahren sind z. B auch in EP-A 1180530 oder EP 1182179 beschrieben.

Als Verfahren zum Auftragen der Polymerlösung oder Polymerdispersion auf den Zuschlag eignen sich insbesondere Sprühen, Tauchen und Trommeln. Zum Vermischen und zur gleichmäßigen Beschichtung eigenen sich übliche Mischvorrichtungen, insbesondere Trommelmischer. Der Auftrag und das Mischen erfolgen so, dass die Partikeloberflächen möglichst vollständig beschichtet werden. Die aufzutragende Menge richtet sich nach der Art des Polymerfilms und dem Zuschlag. Bei Verwendung von Polymerdispersionen ist in der Regel eine Beschichtungsmenge (trocken) von 1 bis 100 g/kg Zuschlag, bevorzugt von 5 bis 50 g/kg , besonders bevorzugt von 5 bis 30 g/kg Zuschlag für eine effiziente Wirkung ausreichend. Nach dem vollständigen Auftragen wird die Beschichtung ausgehärtet. Polymerdispersionen können üblicherweise auf einfache Weise durch Trocknen ausgehärtet werden. Dies kann beispielsweise erfolgen, wenn der Zuschlag auf eine Folie oder ein Metallgitter aufgebracht wird. Die Trockenzeit beträgt beispielsweise 10 Minuten bis 3 Stunden, insbesondere etwa eine Stunde, und kann zusätzlich durch Luftzufuhr und/oder erhöhte Temperatur beschleunigt werden.

In bevorzugten Ausführungsformen der Erfindung ist die mittlere Dicke des Polymerfilms kleiner als 100 µm, bevorzugt kleiner als 50 µm oder kleiner als 20 µm, besonders bevorzugt kleiner als 10 µm oder kleiner als 5 µm. Der Polymerfilm muss jedoch eine ausreichende Dicke aufweisen, um die Diffusion der Natrium- und Kaliumionen in den Zuschlag zu verhindern. Bevorzugt weist der Polymerfilm eine mittlere Dicke von mindestens 2 µm, mindestens 5 µm oder mindestens 10 µm auf.

Gegenstand der Erfindung ist auch ein beschichteter Zuschlag zur Betonherstellung, erhältlich durch ein erfindungsgemäßes Verfahren. Ein erfindungsgemäßer beschichteter Zuschlag besteht aus einem Betonzuschlag, der mit einem erfindungsgemäßen ausgehärteten Polymerfilm gleichmäßig beschichtet ist. Die Zuschläge und Polymere sind dabei ausgewählt wie oben ausgeführt.

Gegenstand der Erfindung ist auch eine Betonzusammensetzung, enthaltend
(a) mindestens einen Zement,
(b) mindestens einen erfindungsgemäßen beschichteten Zuschlag, und
(c) gegebenenfalls Betonzusatzstoffe und/oder Betonzusatzmittel.

Als Zemente werden anorganische, feingemahlene Stoffe bezeichnet, die nach dem Anrühren mit Wasser infolge chemischer Reaktionen selbständig erstarren und aushärten. Erfindungsgemäß können beliebige Zemente eingesetzt werden, die üblicherweise zur Betonherstellung verwendet werden.

Erfindungsgemäß wird mit dem Begriff "Betonzusammensetzung" eine aushärtbare Zusammensetzung in Pulverform oder in Form einer Suspension bezeichnet, die zur weiteren Verarbeitung zu einem festen Betonformkörper geeignet ist. Dabei kann der Zement noch weitgehend trocken sein oder bereits teilweise oder vollständig mit Wasser versetzt sein. Der Zement kann ganz oder teilweise abgebunden sein.

Als Betonzusatzstoffe werden pulverförmige oder flüssige Zusätze bezeichnet, die bestimmte Eigenschaften des Betons beeinflussen. Übliche Betonzusatzstoffe sind beispielsweise mineralische Feinstoffe, inerte Feinstoffe, Flugasche, Farbpigmente, Fasern und organische Stoffe, wie Kunstharzdispersionen. Betonzusatzstoffe werden üblicherweise bei der Erstellung der Rezeptur des Betons als Volumenbestandteile berücksichtigt.

Als Betonzusatzmittel werden in Wasser gelöste oder aufgeschlämmte Stoffe bezeichnet, die dem Beton beigemischt werden, um die Eigenschaften des Frisch- oder Festbetons, wie Verarbeitbarkeit, Abbindverhalten, Aushärten oder Dauerhaftigkeit zu verändern. Übliche Betonzusatzmittel sind solche gemäß der EN 934, beispielsweise Betonverflüssiger, Fließmittel, Stabilisatoren, Erstarrungsbeschleuniger, Erhärtungsbeschleuniger, Verzögerer, Dichtungsmittel, Verflüssiger und Fließmittel.

In einer besonderen Ausführungsform der Erfindung ist ein Lithiumsalz, insbesondere Lithiumnitrat, in der Betonzusammensetzung und/oder in der Polymerdispersion selbst enthalten. Wie oben ausgeführt, ist bei Verwendung eines erfindungsgemäßen beschichteten Zuschlags der Einsatz von Lithiumnitrat nicht unbedingt erforderlich, da die erfindungsgemäße Beschichtung die AKR verhindert. Es kann jedoch im Einzelfall oder bei bestimmten Verwendungen von Vorteil sein, als zusätzliche Sicherung eine Lithiumverbindung hinzuzufügen, beispielsweise wenn eine besondere Langzeitstabilität von besonders reaktiven Zuschlägen erreicht werden soll.

In einer besonderen Ausführungsform der Erfindung enthält die Betonzusammensetzung und/oder die Polymerdispersion einen Kronenether. Der Kronenether kann in einer bevorzugten Ausführungsform in die Polymerschicht einpolymerisiert sein. Kronenether sind zyklische Ether, die stabile Komplexe mit Alkali- oder Erdalkaliionen bilden. Bevorzugt werden Kronenether eingesetzt, die mit Natrium- und Kaliumionen stabile Komplexe ausbilden. Zur Fixierung von Kaliumionen im Beton oder in der Polymerschicht ist beispielsweise Dicyclohexano[18]Krone-6 besonders geeignet. Bei Einsatz der erfindungsgemäßen Kronenether können Natrium- und Kaliumionen in dem Beton oder in der Polymerschicht fixiert werden, so dass die AKR zusätzlich behindert wird.

Gegenstand der Erfindung ist auch ein Verfahren zur Herstellung von Beton, umfassend die Schritte
(A) Vermischen der Komponenten (a) bis (c) der erfindungsgemäßen Betonzusammensetzung,
(B) Formen und
(C) Aushärten zu einem Beton.

Bei Schritt (B) bedeutet das "Formen", dass der Zusammensetzung zu einer beliebigen dreidimensionalen Form verarbeitet wird, beispielsweise einem Straßenbelag, einer Füllung oder einem geformten Bauteil. Das Formen kann mit Hilfe von Schalungsteilen oder einer Gussform, aber auch durch Spachteln etc. erfolgen. Bei dem erfindungsgemäßen Verfahren können auch zusätzlich Zuschläge eingesetzt werden, die nicht beschichtet sind. Beispielsweise können in der Betonzusammensetzung nur solche Zuschläge beschichtet werden, die aufgrund ihrer Beschaffenheit zur AKR neigen.

Gegenstand der Erfindung ist auch ein Beton, erhältlich durch Aushärten einer erfindungsgemäßen Betonzusammensetzung oder durch ein erfindungsgemä-βes Verfahren.

Beton ist ein vielseitig eingesetzter Baustoff, der aus Gemischen aus Zementen, Zuschlägen und Wasser hergestellt wird. Erfindungsgemäß kann der Zuschlag in jeder bekannten Art von Beton eingesetzt werden.

Gegenstand der Erfindung ist auch die Verwendung von organischen Polymeren zur Beschichtung von Betonzuschlägen zur Verbesserung der Stabilität von Beton. Bevorzugt erfolgt die erfindungsgemäße Verwendung zur Verbesserung der Stabilität von Beton gegen die Alkali-Kieselsäure-Reaktion.

Der erfindungsgemäße Zuschlag eignet sich insbesondere für Betonzusammensetzungen, die einen hohen wirksamen Alkaligehalt aufweisen. Beispielsweise kann der wirksame Alkaligehalt größer als 1 %, insbesondere größer als 1,5% oder größer als 2,5% sein (Na₂O-Äquivalent gemäß DIN 1164-10).

Die erfindungsgemäßen Zuschläge lösen die der Erfindung zugrunde liegenden Aufgaben. Bei Einsatz der beschichteten Zuschläge kann die AKR verhindert oder zumindest wesentlich beeinträchtigt werden. Der Einsatz von Lithiumverbindungen ist nicht mehr erforderlich. Die erfindungsgemäße Beschichtung verhindert unabhängig von dem eingesetzten Zement und der Gesamtzusammensetzung die AKR. Ungeachtet dessen weist der Beton gute, gleichbleibende Materialeigenschaften auf. Durch die AKR verursachte Materialschäden, wie Risse oder Versprödungen, treten auch bei Feuchtigkeit und über lange Zeiträume nicht auf oder werden signifikant zurückgedrängt.

### Ausführungsbeispiele

### Beispiel 1: Beschichtung eines Zuschlags

Als Zuschlag zum Beschichten wird Splitt der Körnung 8/11, 11/16 und 16/22 der Mitteldeutschen Baustoffe GmbH, Werk Harzer Grauwacke Rieder oder Splitt (Muschelkalk) der Körnung 8/16 der Firma Schotterwerk Gfrörer & Sohn, Schotterwerk Fischingen oder Edelsplitt der Körnung 8/11 und 11/16 aus dem Gebiet Oberrhein eingesetzt. Es werden 8-11 mm Zuschlag, 11-16 mm Zuschlag und 16-22 mm Zuschlag getrennt voneinander beschichtet. Dabei werden jeweils 25 kg eines Zuschlags in einen sog. Freifallmischer Typ LESCHA SM 145 S eingefüllt. Anschließend erfolgt die Zugabe von 0,5 kg einer Polymerdispersion von carboxyliertem Butadien-Styrol-Copolymerisat (Synthomer 29Y41, Firma Synthomer, Feststoffanteil 47%). Die Einfüllöffnung des Mischers wird mit einem Siebverschluss versehen und danach 90 Sekunden mit einer Geschwindigkeit von 64 U/min gemischt. Diese Zeit reicht aus, um den Zuschlag vollständig zu benetzen. In Anschluss lässt man über die Siebvorrichtung die überschüssige Emulsion in ein Auffanggefäß ablaufen und abtropfen. Der Zuschlag wird danach entnommen und breitflächig auf eine PE-Folie ausgeschüttet, wobei der Trocknungsvorgang vorgenommen wird.

### Beispiel 2: Herstellung eines Betons

Mit den gemäß Beispiel 1 hergestellten beschichteten Zuschlägen wird ein Straßenbeton hergestellt. Für die Probekörper der Nebelkammerversuche wird folgende Straßenbetonrezeptur verwendet und wie folgt gemischt: 542 kg/m³ 0-2 mm Zuschlag (Rheinsand der Firma KVB Kies-Vertrieb GmbH & Co. KG, Karlsdorf-Neuthard, Werk Waghäusel), 217 kg/m³ 2-8 mm Zuschlag (Rheinkies der Firma KVB Kies-Vertrieb GmbH & Co. KG, Karlsdorf-Neuthard, Werk Waghäusel), 238 kg/m³ 8-11 mm Zuschlag (aus dem Gebiet Oberrhein, beschichtet gemäß Beispiel 1), 274 kg/m³ 11-16 mm Zuschlag (aus dem Gebiet Oberrhein, beschichtet gemäß Beispiel 1 ), 542 kg/m³ 16-22 mm Zuschlag (Splitt der Firma KVB Kies-Vertrieb GmbH & Co.KG, Karlsdorf-Neuthard, Werk Oberhausen-Rheinhausen) mit 71,5 kg/m³ Wasser (Stadtwasser, Leimen) für 30 Sekunden in einem Zyklus Zwangsmischer gemischt. Danach wird für 180 Sekunden eine Saugpause eingelegt. Dann werden 350 kg/m³ Portlandzement (CEM I 42,5 R, Firma HeidelbergCement, Werk Weisenau/Mainz), 71,5 kg/m³ Wasser (Stadtwasser, Leimen) und evtl. noch ca. 0,1 bis 0,5 % Betonzusatzmittel (Sika Luftporenbildner LPS A-94 auf Basis synthetischer Tenside der Firma Sika Deutschland GmbH, Leimen und Sika Fließmittel FM 31 auf Basis von Polyacrylat der Firma Sika Deutschland GmbH, Leimen) dazu gegeben und nochmals für 120 Sekunden gemischt, wobei die Menge des Betonzusatzmittels so eingestellt wird, dass das Ausbreitmaß 340 mm beträgt (nach DIN EN 12350-5). Der Beton wird ausgehärtet.

## Patentansprüche

1. Verfahren zur Herstellung eines beschichteten Zuschlags zur Betonherstellung, wobei die Oberfläche eines mineralischen Zuschlags mit einem Polymerfilm beschichtet wird, wonach der Polymerfilm ausgehärtet wird.

2. Verfahren gemäß Anspruch 1, wobei der mineralischer Zuschlag mit einer Polymerdispersion in Kontakt gebracht und vermischt wird, so dass die Oberfläche des Zuschlags mit einem Polymerfilm beschichtet wird, wonach der Polymerfilm ausgehärtet wird.

3. Verfahren nach mindestens einem der vorhergehenden Ansprüche, wobei der Zuschlag ausgewählt ist aus Sand, Kies und Splitt, insbesondere Flint, Grauwacke, Sandstein und Kieselkreide.

4. Verfahren nach mindestens einem der vorhergehenden Ansprüche, wobei das Polymer ein Copolymer ist, dass Monomere von Styrol, Butadien, Acrylat, Methacrylat, Vinylacetat, Vinylversatat, Methacrylamid und/oder Acrylamid aufweist, oder ein Epoxid oder Polyurethan ist.

5. Verfahren nach mindestens einem der vorhergehenden Ansprüche, wobei das Polymer ein Styrol-Butadien-Copolymer oder ein Styrol-Acrylat-Copolymer ist, die gegebenenfalls carboxyliert sind.

6. Verfahren nach mindestens einem der vorhergehenden Ansprüche, wobei die mittlere Korngröße des Zuschlags zwischen 0,5 und 100 mm, insbesondere zwischen 2 und 50 mm liegt.

7. Verfahren nach mindestens einem der vorhergehenden Ansprüche, wobei die mittlere Dicke des Polymerfilms kleiner als 100 µm ist.

8. Beschichteter Zuschlag zur Betonherstellung, erhältlich durch ein Verfahren gemäß mindestens einem der vorhergehenden Ansprüche.

9. Betonzusammensetzung zur Betonherstellung, enthaltend
(a) mindestens einen Zement,
(b) mindestens einen beschichteten Zuschlag nach Anspruch 8, und
(c) gegebenenfalls Betonzusatzstoffe und/oder Betonzusatzmittel.

10. Betonzusammensetzung gemäß Anspruch 9, enthaltend zusätzlich mindestens eine Lithiumverbindung und/oder mindestens einen Kronenether.

11. Verfahren zur Herstellung von Beton, umfassend die Schritte
(A) Vermischen der Komponenten (a) bis (c) gemäß Anspruch 9 oder 10 mit Wasser,
(B) Formen und
(C) Aushärten zu einem Beton.

12. Beton, erhältlich durch Aushärten einer Betonzusammensetzung gemäß Anspruch 9 oder 10 oder durch ein Verfahren gemäß Anspruch 11.

13. Verwendung von organischen Polymeren zur Beschichtung von Betonzuschlägen zur Verbesserung der Stabilität von Beton.

14. Verwendung nach Anspruch 13 zur Verbesserung der Stabilität von Beton gegen die Alkali-Kieselsäure-Reaktion.
